Europäisches Patentamt

European Patent Office

Office européen des brevets

(11) Veröffentlichungsnummer: **0 223 171 B1**

## (12) EUROPÄISCHE PATENTSCHRIFT

(45) Veröffentlichungstag der Patentschrift: **26.08.92**

(21) Anmeldenummer: **86115541.4**

(22) Anmeldetag: **10.11.86**

(51) Int. Cl.⁵: **H04N 5/63,** H02M 3/335

(54) Schaltnetzteil.

(30) Priorität: **16.11.85 DE 3540802**

(43) Veröffentlichungstag der Anmeldung:
**27.05.87 Patentblatt 87/22**

(45) Bekanntmachung des Hinweises auf die
Patenterteilung:
**26.08.92 Patentblatt 92/35**

(84) Benannte Vertragsstaaten:
**AT BE CH DE ES FR GB GR IT LI LU NL SE**

(56) Entgegenhaltungen:
**US-A- 4 246 634**

**RADIO FERNSEHEN ELEKTRONIK, Nr. 2, Februar 1985, Seiten 99-102, Ost-Berlin; W.
SECKENDORF et al.: "Wirkungsweise und
Reparaturmethodik des Schaltnetzteils"**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Geiger, Erich, Dipl.-Ing.
Panoramaweg 19
W-7731 Unterkirnach(DE)**
Erfinder: **Hartmann, Uwe, Ing. grad.
Tallardstrasse 15
W-7730 VS-Villingen(DE)**
Erfinder: **Lopez, Daniel
Kopsbühl 68
W-7730 VS-Villingen(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei Geräten der Nachrichtentechnik wie z.B. einem Fernsehempfänger ist es bekannt, die für die einzelnen Stufen notwendigen Betriebsspannungen mit einem Schaltnetzteil aus der Netzspannung zu erzeugen. Ein Schaltnetzteil ermöglicht die für den Anschluß äußerer Geräte und für die Maßnahmen zur Isolierung vorteilhafte galvanische Trennung der Empfängerschaltung vom Netz. Da ein Schaltnetzteil mit einer gegenüber der Netzfrequenz hohen Frequenz arbeitet, kann der zur galvanischen Trennung dienende Schaltnetzteiltransformator gegenüber einem Netztransformator für 50 Hz wesentlich kleiner und leichter ausgebildet sein. Durch mehrere Wicklungen oder Wicklungsabgriffe und angeschlossene Gleichrichter können auf der Sekundärseite des Schaltnetzteiltransformators Betriebsspannungen unterschiedlicher Größe und Polarität erzeugt werden.

In der älteren, gegenüber dem Prioritätstag der vorliegenden Anmeldung nicht vorveröffentlichten Patentanmeldung EP-A-0 197 045 ist ein mit der Zeilenfrequenz synchronisiertes Schaltnetzteil beschrieben, bei dem der Schalttransistor von einer sekundärseitig angeordneten integrierten Schaltung (TEA 2029) über eine galvanische Trennung lastabhängig durch Impulsbreitenmodulation gesteuert wird. Bei Anlegen einer Versorgungsspannung startet die integrierte Schaltung, indem der Impulsbreitenmodulator zunächst mit Impulsen kleiner Breite beginnt und dadurch ein weiches Einschalten bewirkt. Auch ist die integrierte Schaltung mit einer Schutzschaltung versehen, die bei Überlast zeitig die Ansteuerung des Schalttransistors unterbricht und nach einer Erholzeit wieder aufnimmt, indem der Impulsbreitenmodulator wiederum zunächst mit Impulsen kleiner Breite beginnt und dadurch ein weiches Einschalten bewirkt. Ein Großteil der Fernsehempfänger ist fernbedienbar und daher für den "standby"-Betrieb mit einer Versorgung für den Fernbedienungsempfänger ausgerüstet. Diese Empfänger arbeiten zum Teil mit einem 50 Hz Zusatznetzteil, oder das gesamte Schaltnetzteil wird in einem "Sparbetrieb" z.B. mit herabgesetzten oder abgeschalteten Spannungen auf der Sekundärseite betrieben.

Für einen Empfänger ohne Fernbedienung ist ein derartiger Aufwand jedoch zu groß. Es hat sich als wirtschaftlich herausgestellt, das Schaltnetzteil für diese Empfänger mit einem primärseitig angeordneten Startoszillator auszurüsten.

Aus der Patentschrift DE-A-32 27 152 ist ein Schaltnetzteil bekannt, bei dem auf der netzverbundenen Seite ein Oszillator vorgesehen ist, der bei Fehlen eines horizontalfrequenten Spannungsregelsignales während einer Anlaufphase nach dem Einschalten frei schwingt. Der Schalttransistor ist so angesteuert, daß auf der netzgetrennten Seite des Schaltnetzteiltransformators Spannungen entstehen, die zum Anlauf des Horizontalablenkteiles ausreichen. Der Startoszillator wird in einere späteren Phase durch das sekundärseitig erzeugte horizontalfrequente Spannungsregelsignal synchronisiert und danach abgeschaltet.

Bei dieser Ausführung einer Startschaltung wird der Schalttransistor bis zur Schutzschaltschwelle einer primärseitig angeordneten Schutzschaltung ausgesteuert, die zwar unmittelbar nach dem Start ein niedriges Niveau hat, jedoch durch Rückkopplung schnell auf hohes Niveau ansteigt. Durch das Fehlen einer sekundärseitig angeordneten Anlaufschaltung ergibt sich während des Hochlaufvorganges im Schalttransistor eine größtmögliche Stromflußzeit und damit ein maximal zulässiger Grenzstrom, der sonst nur im Störungsfall erreicht wird.

Es ist Aufgabe der Erfindung, die beschriebenen Nachteile der Grenzbelastung eines Schalttransistors während eines Einschaltvorganges zu vermeiden. Diese Aufgabe wird durch ein Schaltnetzteil nach dem Oberbegriff des Anspruchs 1, durch die im Kennzeichen des Anspruchs 1 beschriebenen Merkmale gelöst. Weiterbildungen der Erfindung sind in den abhängigen Ansprüchen beschrieben.

Im Prinzip wird auf der Primärseite des Schaltnetzteiles nach dem Einschalten mittels Gleichrichtung über eine vorgegebene Zeitkonstante eine Gleichspannung aufgebaut. Bei Erreichen einer Spannung von zirka 3 V schwingt ein Oszilltor, bestehend aus einer Multivibratorschaltung, bei etwa 13 kHz zunächst mit großem Tastverhältnis an. Mit steigender Spannung wird das Tastverhältnis bei etwa gleichbleibender Frequenz verringert.

Der Oszillator steuert den Schalttransistor, dessen Stromflußwinkel sich proportional zur ansteigenden Gleichspannung ändert. Das Netzteil beginnt zu arbeiten, und die Versorgungsspannungen steigen an. Der sekundärseitig angeordnete Impulsbreitenmodulator gibt zeilenfrequente Impulse mit zunächst großem Tastverhältnis ab, die dem primärseitigen Oszillator über eine Netztrennung zugeführt werden. Bei Eintreffen der ersten Impulse gibt der in der Frequenz niedriger schwingende Startoszillator seine Funktion auf, und die Steuerung wird vom Impulsbreitenmodulator übernommen. Da bei dieser Übernahme das Tastverhältnis der aus dem Impulsbreitenmodulator gelieferten Impulse sehr groß ist (63:1) muß, um einen Schwebezustand bei geringen Versorgungsspannungen zu vermeiden, das Tastverhältnis unabhängig vom Impulsbreitenmodulator weiter verringert werden. Dieses geschieht in der Anlaufschaltung wie bisher durch das Ansteigen der mittels Gleichrichtung aus dem Netz gewonnenen, über eine Zeitkonstante sich weiter aufbauenden Spannung.

Bei Erreichen etwa des gleichen Tastverhältnisses zwischen den Steuerimpulsen an der Basis des Schalttransistors und den vom Impulsbreitenmodulator gelieferten Steuerimpulsen wird die Funktion der Anlaufschaltung durch einen als Schalter gesteuerten Transistor abgeschaltet. Damit ist der Startvorgang beendet, und die weitere Steuerung des Schaltnetzteiles geschieht durch den Impulsbreitenmodulator.

An Hand der Figuren soll die Erfindung beispielhaft näher erläutert werden. Es zeigen

Fig. 1    ein auszugsweises Schaltbild eines Schaltnetzteiles mit Startoszillator,

Fig. 2    den Verlauf von Spannungen im Startoszillator,

Fig. 3    die Übernahme des Startoszillators durch den Impulsbreitenmodulator.

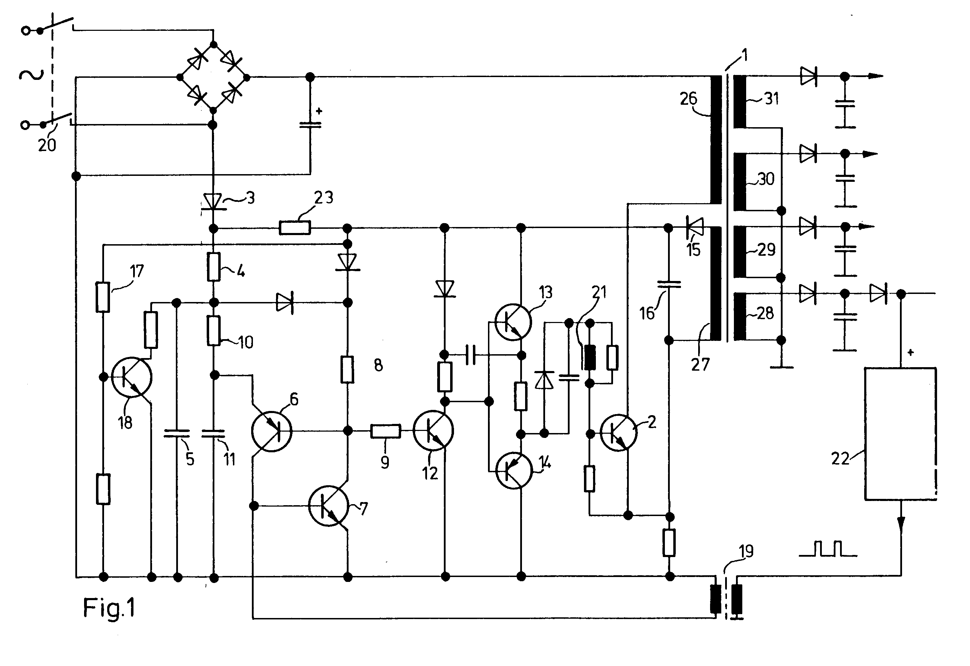

Fig. 1 zeigt in einem auszugsweisen Schaltbild ein Schaltnetzteil mit Startoszillator. Nach dem Einschalten mit Netzschalter 20 wird die mit Diode 3 gleichgerichtete Wechselspannung über den Widerstand 4 an den Kondensator 5 gelegt. Die Spannung steigt entsprechend der relativ groß gewählten Zeitkonstante (R4 ca. 150 kOhm, C5 ca. 220 μF) an. Die Anlaufschaltung wird gebildet aus den Transistoren 6 und 7, dem Spannungsteiler mit den Widerständen 8 und 9 sowie der Zeitkonstanten mit Widerstand 10 und Kondensator 11. Bei etwa 3 V an C5 beginnt die als Oszillator arbeitende Schaltung mit einem relativ großen Tastverhältnis an zu schwingen. Durch die Beschaltung ergibt sich eine Frequenz von etwa 13 kHz. Die Spannungsversorgung für die den Schalttransistor 2 ansteuernden, im Gegentakt geschalteten Transistoren 13 und 14 sowie für Vorstufentransistor 12 erfolgt während der Anlaufphase über Diode 3, Widerstand 23 und Ladekondensator 16. Sie ist kleiner als die Spannung, die sich nach Abschluß der Anlaufphase im eingeschwungenen Zustand des Schaltnetzteiles ergibt. Mit steigender Spannung am Kondensator 5 verkleinert sich das Tastverhältnis im Startoszillator, und somit ändert sich der Stromflußwinkel im Schalttransistor 2 direkt proportional zu der am Kondensator 5 anliegenden Spannung. Durch die in Reihe mit dem Schalttransistor 2 liegende Arbeitswicklung 26 des Schaltnetzteiltransformators 1 werden Spannungen in den Wicklungen 27 bis 31 induziert, wodurch ein Ansteigen der Versorgungsspannungen erfolgt. Bei einer bestimmten Größe dieser Versorgungsspannungen nimmt der Impulsbreitenmodulator 22 in der integrierten Schaltung TEA 2029 seine Funktion auf und liefert über den Trenntransformator 19 zeilenfrequente Impulse mit zunächst großem Tastverhältnis an die Basis von Transistor 7. Bei Eintreffen des ersten oder zweiten Impulses wird der mit niedrigerer Frequenz schwingende Startoszillator außer Funktion gebracht, und die Steuerung für den Schalttransistor 2 wird zeilenfrequent vom Impulsbreitenmodulator 22 übernommen. Weil das Tastverhältnis dieser ersten Impulse relativ groß ist, könnten die sekundärseitigen Spannungen nicht weiter ansteigen, und es würde sich ein Schwebezustand einstellen. Daher ist die Anlaufschaltung so ausgelegt, daß durch das weitere Ansteigen der Spannung am Kondensator 5 auch eine Impulsbreitenverringerung der von Modulator 22 gelieferten Impulse erfolgt. Erst wenn die vom Impulsbreitenmodulator gelieferten Impulse ein gleichgroßes Tastverhältnis wie die an der Basis von Transistor 12 stehenden Impulse haben, wird die Steuerung für Schalttransistor 2 voll vom Impulsbreitenmodulator 22 übernommen.

Von diesem Übernahmepunkt ab wird die Startschaltung durch Kurzschließen von Kondensator 5 außer Betrieb gesetzt. Dieses Kurzschließen ist bei etwa 3/4 der erreichten Versorgungsspannungen erforderlich, um ein weiteres unkontrolliertes Ansteigen durch Impulsbreitenverringerung zu verhindern. Der Kurzschluß erfolgt durch Transistor 18, der von einer aus Wicklung 27 mit Diode 15 und Kondensator 16 erzeugten Gleichspannung über Widerstand 17 an seiner Basis leitend gesteuert wird. Transistor 6 ist somit ohne Kollektorspannung, wodurch die Startschaltung ohne Funktion ist.

Die Steuerung von Schalttransistor 2 erfolgt jetzt über die Transistoren 7, 12 und die Gegentakttransistoren 13 und 14 sowie über die Ankopplungsschaltung 21.

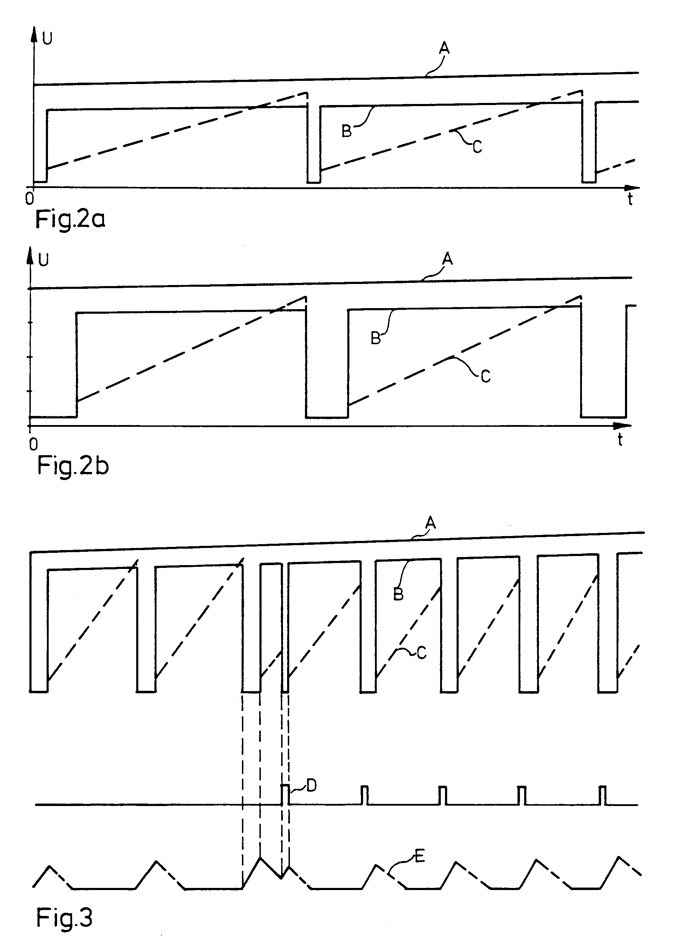

Fig. 2 zeigt den Verlauf von Spannungen im Startoszillator.

Mit A ist der Verlauf der Spannung an Kondensator 5 aus Fig. 1 aufgezeichnet. B zeigt den Verlauf der Kollektorspannung von Transistor 7 und C die Spannung an Kondensator 11 mit einer Taktfrequenz von etwa 13 kHz.

In Fig. 2a ist das große Tastverhältnis direkt nach dem Einschalten dargestellt, während Fig. 2b ein geringeres Tastverhältnis ca 2 ms nach dem Einschalten bei gleicher Taktfrequenz aufzeigt.

Fig. 3 zeigt die Übernahme des Startoszillators durch den Impulsbreitenmodulator. Mit D werden die zeilenfrequenten Impulse aus dem Impulsbreitenmodulator dargestellt, deren Phasenlage beliebig zu den vom Startoszillator erzeugten Impulsen sein kann. Bei Eintreffen des ersten Impulses wird der Kondensator 11 entladen, und die Steuerung wird durch den Impulsbreitenmodulator 22 übernommen. Der kontinuierliche Hochlauf der Spannung A an Kondensator 5 wird nicht gestört. Die Ladung für den Kondensator 11 (Kurve C) in Abhängigkeit von Spannung A bestimmt unabhängig von der geringen Impulsbreite der zeilenfrequenten Impulse die Einschaltzeit des Schalttransistors 2, dessen Kollektorstrom in der Kurve E dargestellt ist.

**Patentansprüche**

1. Schaltnetzteil, insbesondere für ein Fernsehgerät, mit einem Schalttransistor (2), der nach dem Einschalten von einer Anlaufschaltung periodisch leitend und nicht leitend gesteuert wird und dessen Steuerung während des Startvorganges von einem Impulsbreitenmodulator (22) übernommen wird, dessen Versorgung von einer durch das Schaltnetzteil erzeugten Spannung erfolgt, **dadurch gekennzeichnet,** daß die Anlaufschaltung netzverbunden ist und einen Startoszillator enthält,

daß der Startoszillator einen ersten Kondensator (11) enthält, der mit einem ersten Transistor (6) und einem zweiten Transistor (7) eine Multivibratorschaltung bildet, sowie einen zweiten Kondensator (5) enthält, der parallel zur Multivibratorschaltung geschaltet ist,

daß der Startoszillator bei Erreichen eines Spannungsbetrages beim Anstieg einer Gleichspannung, die nach dem Einschalten des Schaltnetzteils an dem zweiten, zur Multivibratorschaltung parallel geschalteten Kondensator (5) aufgebaut wird, mit Rechteckschwingungen startet, die ein großes Tastverhältnis und eine gegenüber der Frequenz des Impulsbreitenmodulators (22) niedrigere Frequenz aufweisen, wobei die Ladung für den ersten Kondensator (11) in Abhängigkeit von der Gleichspannung an dem zweiten Kondensator (5) das Tastverhältnis in der Weise bestimmt, daß mit dem Anstieg dieser sich am zweiten Kondensator (5) aufbauenden Gleichspannung das Tastverhältnis bei etwa gleichbleibender Frequenz kontinuierlich abnimmt,

und daß mit der Übernahme der Steuerung für den Schalttransistor (2) durch den Impulsbreitenmodulator (22) durch Abgabe der ersten Impulse an einen Steuereingang der Multivibratorschaltung die Funktion des Startoszillators beendet ist.

2. Schaltnetzteil nach Anspruch 1, **dadurch gekennzeichnet,** daß mit dem weiteren Ansteigen der Gleichspannung an dem zweiten Kondensator (5) und der Impulsabgabe des Impulsbreitenmodulators (22) an den Steuereingang der Multivibratorschaltung das Tastverhältnis weiter verringert wird, bis die vom Impulsbreitenmodulator (22) gelieferten Impulse ein gleichgroßes Tastverhältnis aufweisen.

3. Schaltnetzteil nach Anspruch 1 oder 2, **dadurch gekennzeichnet,** daß bei Übernahme der alleinigen Steuerung des Schalttransistors (2) durch den Impulsbreitenmodulator (22) der zweite Kondensator (5) durch einen dritten Transistor (18) des Startoszillators kurzgeschlossen wird.

4. Schaltnetzteil nach einem der Ansprüche 1 - 3, **dadurch gekennzeichnet,** daß die Frequenz des Impulsbreitenmodulators (22) die Zeilenfrequenz eines Fernsehgerätes ist.

5. Schaltnetzteil nach einem der Ansprüche 1 - 4, **dadurch gekennzeichnet,** daß der Impulsbleitenmodulator (22), auf der netzgetrennten Seite des Schaltnetzteils angeordnet ist.

**Claims**

1. Switch-mode power supply unit, in particular for a television set, with a switching transistor (2), which following switch-on is controlled by a starting circuit so as to be periodically conductive and non-conductive and control of which is taken over during the starting process by a pulse width modulator (22), which is supplied by a voltage generated by the switch-mode power supply unit, characterized in that the starting circuit is connected to the mains supply and contains a starting oscillator, that the starting oscillator contains a first capacitor (11), which with a first transistor (6) and a second transistor (7) forms a multivibrator circuit, and contains a second capacitor (5), which is connected parallel to the multivibrator circuit, that upon the attainment of a voltage value during the rise of a direct voltage, which is built up at the second capacitor (5) connected parallel to the multivibrator circuit following switch-on of the switch-mode power supply unit, the starting oscillator starts up with square waves, which have a large mark-space ratio and a lower frequency compared to the frequency of the pulse width modulator (22), the charge for the first capacitor (11) depending on the direct voltage at the second capacitor (5) determining the mark-space ratio in a manner such that, as this direct voltage building up at the second capacitor (5) rises, the mark-space ratio decreases continuously while the frequency remains approximately the same, and that when control of the switching transistor (2) is taken over by the pulse width modulator (22) by release of the first pulses to a control input of the multivibrator circuit, the function of the starting oscillator is terminated.

2. Switch-mode power supply unit according to claim 1, characterized in that, as the direct voltage at the second capacitor (5) rises further and pulses are released by the pulse width modulator (22) to the control input of the multivibrator circuit, the mark-space ratio is further reduced until the pulses supplied by the pulse width modulator (22) have a commensurate mark-space ratio.

3. Switch-mode power supply unit according to claim 1 or 2, characterized in that when sole control of the switching transistor (2) is taken over by the pulse width modulator (22), the second capacitor (5) is short-circuited by a third transistor (18) of the starting oscillator.

4. Switch-mode power supply unit according to one of claims 1 - 3, characterized in that the frequency of the pulse width modulator (22) is the line frequency of a television set.

5. Switch-mode power supply unit according to one of claims 1 - 4, characterized in that the pulse width modulator (22) is arranged on the side of the switch-mode power supply unit isolated from the mains supply.

**Revendications**

1. Bloc d'alimentation et de commutation, en particulier pour un appareil de télévision, avec un transistor de commutation (2) qui est commandé en étant périodiquement conducteur et non conducteur après la mise en circuit d'un circuit de démarrage et dont la commande est prise en charge, pendant l'opération de démarrage, par un modulateur d'impulsions en durée (22) dont l'alimentation est effectuée par une tension produite par le bloc d'alimentation et de commutation, **caractérisé en ce** que le circuit de démarrage est relié au secteur et qu'il contient un oscillateur de démarrage, que l'oscillateur de démarrage contient un premier condensateur (11), qui forme un circuit à multivibrateur avec un premier transistor (6) et un second transistor (7), ainsi qu'un second condensateur (5) qui est monté en parallèle avec le circuit à multivibrateur, que l'oscillateur de démarrage démarre, lorsqu'une valeur de la tension est atteinte lors de la montée d'une tension continue qui se constitue après la mise en circuit du bloc d'alimentation et de commutation sur le second condensateur (5) monté en parallèle, avec des ondes rectangulaires qui présentent un taux d'impulsions élevé et une fréquence plus basse que la fréquence du modulateur d'impulsions en durée (22), la charge pour le premier condensateur (11) déterminant le taux d'impulsions en fonction de la tension continue sur le second condensateur (5) de telle manière que le taux d'impulsions diminue continuellement pour une fréquence approximativement constante lors de la montée de cette tension continue qui se constitue sur le second condensateur (5) et que la fonction de l'oscillateur de démarrage est terminée avec la prise en charge de la commande du transistor de commutation (2) par le modulateur d'impulsions en durée (22) en délivrant les premières impulsions à une entrée de commande du circuit à multivibrateur.

2. Bloc d'alimentation et de commutation selon la revendication 1, **caractérisé en ce** que le taux d'impulsions continue à diminue lorsque la tension continue continue à monter sur le second condensateur (5) et que le modulateur d'impulsions en durée (22) donne des impulsions à l'entrée de commande du circuit à multivibrateur jusqu'à ce que les impulsions délivrées par le modulateur d'impulsions en durée (22) présentent un taux d'impulsions de même grandeur.

3. Bloc d'alimentation et de commutation selon la revendication 1 ou 2, **caractérisé en ce** que, lors de la prise en charge de la commande exclusive du transistor de commutation (2) par le modulateur d'impulsions en durée (22), le second transistor (5) est court-circuité par un troisième transistor (18) de l'oscillateur de démarrage.

4. Bloc d'alimentation et de commutation selon l'une des revendications 1 à 3, **caractérisé en ce** que la fréquence du modulateur d'impulsions en durée (22) est la fréquence ligne d'un appareil de télévision.

5. Bloc d'alimentation et de commutation selon l'une des revendications 1 à 4, **caractérisé en ce** que le modulateur d'impulsions en durée (22) est placé sur le côté séparé du secteur du bloc d'alimentation et de commutation.

Fig.1

Fig.2a

Fig.2b

Fig.3